# EUROPEAN PATENT APPLICATION

(11) **EP 1 865 395 A1**
(43) Date of publication of application: **12.12.2007**
(21) Application number: 07010715.6
(22) Date of filing: 30.05.2007
(51) Int. Cl.: G05B 19/406, G06F 11/36

(54) **Device for observing internal data of control device**

(30) Priority: 06.06.2006 JP 2006157494
(71) Applicant: Fanuc Ltd, Minamitsuru-gun, Yamanashi 401-0597 (JP)
(72) Inventor: Uchida, Hiroyuki, Minamitsuru-gun Yamanashi 401-0597 (JP); Iwashita, Yasusuke, Fujiyoshida-shi Yamanashi 403-0003 (JP); Okita, Tadashi, Fujiyoshida-shi Yamanashi 403-0005 (JP); Sugiyama, Kazuyuki, Minamitsuru-gun Yamanashi 401-0511 (JP)
(74) Representative: Thum, Bernhard

(57) **Abstract**

A data observation device observes internal data of a control device for controlling a machine tool, an industrial machine, an industrial robot, or the like which has at least one drive shaft driven by one selected from a servo motor, a spindle motor. The device includes: means which specifies observational data targeted for observation; means which specifies trigger data used to determine a timing of a trigger for starting and/or terminating acquisition of the observational data; means which sets a trigger condition for applying the trigger based on a value of the trigger data; and means which judges whether or not the trigger condition is satisfied in the control device, selectively starts and terminates acquisition of a value of the observational data, and displays the acquired observational data.

## Description

### BACKGROUND OF THE INVENTION

### 1. Field of the Invention

The present invention relates to a data observation device for observing the internal data of a control device which controls a machine tool, an industrial machine or an industrial robot for the purpose of examining and adjusting the control properties of a servo or spindle motor. More specifically, it relates to a data observation device for observing the internal data of a control device which uses data in a control device other than observational data to apply a trigger and enable data observation. The data in a control device is not output to the outside, and examples of such data are an abnormal signal and a warning signal in association with a drive-control device of a motor, a detector and the like, and a flag used for interface between an NC and a drive-control device of a motor.

### 2. Description of the Related Art

Japanese Unexamined Patent Publication (KOKAI) No. 2000-210800 titled "METHOD FOR MONITORING INDUSTRIAL MACHINE AND DEVICE THEREFOR" proposes a method for monitoring an industrial machine which includes: measuring a working state of an industrial machine; recording the results of the measurements in waveform data successive in time sequence; processing the recorded waveform data; and graphically displaying the processed data on a screen, and a device therefor.

In the "Means for Solving the Problems, and Effect and Advantage" of the above-mentioned document, there is a description concerning a trigger. However, it only contains a description that a trigger is set for a waveform to be acquired. There is no description defining a trigger for acquisition of a waveform. That is, it contains no description of the following items.
Item 1: The trigger condition is judged on the side of the control device.
Item 2: The trigger condition is determined based on a situation in which data value specified separately from an acquired waveform falls within a certain range.
Item 3: The trigger condition is determined by use of plural kinds of data.

Japanese Unexamined Patent Publication (KOKAI) No. H11-259111 discloses an invention titled a "METHOD AND DEVICE FOR DISPLAYING LOAD STATE." This document proposes a method for displaying a situation of a load which includes: detecting an amount of electricity supplied to a driving power source of a device targeted for control; computing a load state based on the amount of electricity; displaying the load state on a monitor. Claim 5 thereof contains the descriptions of: setting a trigger of a predetermined level; storing and displaying load states before and after arrival at the trigger level; and notifying the arrival at the trigger level. However, there is no description of a trigger condition for acquisition of a waveform which is judged on the side of the control device.

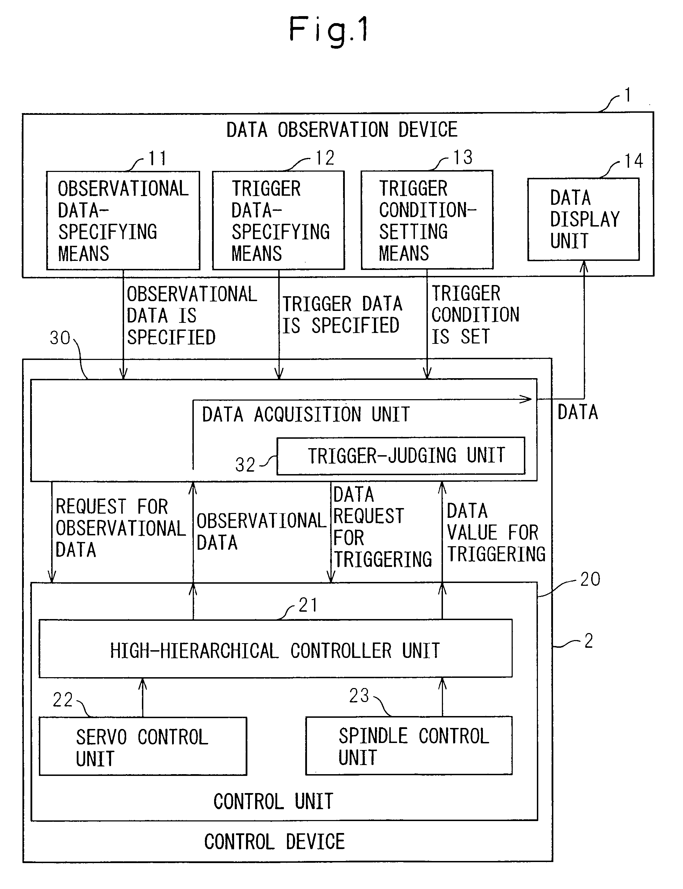

Japanese Unexamined Patent Publication (KOKAI) No. 2000-210800 (See Claims, Paragraph Nos. 0006 to 0013, 0015 to 0019 in the Specification, Figure 1, and Abstract.)
Japanese Unexamined Patent Publication (KOKAI) No. H11-259111 (See Claims 1 and 5, Paragraph Nos. 0011 and 0012, 0037 to 0040 in the Specification, and Figure 1.)

In the prior art, a common measurement device such as an oscilloscope has been used to make data measurements when measuring the state of a control device for controlling a machine tool, an industrial machine, an industrial robot, etc. which have at least one drive shaft driven by a servo or spindle motor, as in the invention described in KOKAI No. 2000-210800. In addition, as in the invention in KOKAI No. H11-259111, data measurement has been performed by selecting one kind of measured data and utilizing e.g. an event that the selected data has exceeded a certain value to apply a trigger.

In the prior art, only data previously prepared as an external output of a control device can be observed, and it is only possible to apply a trigger to one kind of data targeted for measurement focusing on the kind of data. However, there is a problem in that internal data of a control device cannot be observed in detail.

### SUMMARY OF THE INVENTION

Hence, it is an object of the invention to provide a data observation device, which enables detailed observation of internal data of a control device for controlling a machine tool, an industrial machine or an industrial robot, which has at least one drive shaft driven by one selected from a servo motor and a spindle motor. It is also an object of the invention to facilitate examination and adjustment of the servo and spindle control systems.

The data observation device in accordance with a first aspect of the invention, which enables achievement of the objects, is a data observation device for observing internal data of a control device for controlling a machine tool, an industrial machine or an industrial robot, which has at least one drive shaft driven by a servo motor or a spindle motor. The device includes: a means which specifies observational data targeted for observation; a means which specifies trigger data used to determine a timing of a trigger for starting and/or terminating acquisition of the observational data; a means which sets a trigger condition for applying the trigger based on a value of the trigger data; and a means which determines whether or not the trigger condition is satisfied in the control device, selectively starts and terminates acquisition of a value of the observational data, and displays the acquired observational data.

The data observation device in accordance with a second aspect of the invention, which enables achievement of the objects, is a data observation device for observing internal data of a control device for controlling a machine tool, an industrial machine or an industrial robot, which has at least one drive shaft driven by a servo motor or a spindle motor. The device includes: a means which specifies observational data targeted for observation; a means which specifies trigger data used to determine a timing of a trigger for starting and/or terminating acquisition of the observational data; a means which sets a trigger condition for applying the trigger based on a value of the trigger data; and a means which determines whether or not the trigger condition is satisfied in the control device, selectively starts and terminates accumulation of a value of the observational data in a buffer memory provided in the control device, and displays the accumulated observational data.

In the data observation device in accordance with the first or second aspect, the observational data and trigger data are contained in at least one of a servo control unit, a spindle control unit, and a high-hierarchical controller unit which provides a command to the servo and spindle control units.

In the data observation device, the trigger is applied when a value of the trigger data specified by the specifying means becomes not less than or not more than a separately specified value.
In the data observation device, plural kinds of trigger data used for the trigger condition are specified. With respect to each kind of trigger data, a trigger condition that a trigger is applied when a value of trigger data becomes not less than or not more than a separately specified value is set. Further, when all the trigger conditions are met, the trigger condition of observational data is regarded as being met.

In the data observation device, plural kinds of trigger data used for the trigger condition are specified. With respect to each kind of trigger data, a trigger condition that a trigger is applied when a value of trigger data becomes not less than or not more than a separately specified value is set. Further, when at least one of the trigger conditions is met, the trigger condition of observational data is regarded as being met.
In the data observation device, plural kinds of trigger data used for the trigger condition are specified. With respect to the plural kinds of trigger data, at least one of the operations of addition, subtraction, multiplication and division is performed. Further, a condition where a result of the at least one operation becomes not less than or not more than a separately specified value is used as the trigger condition of observational data

As for the data observation device, the data observation device is provided in an NC control device, and the observational data and trigger can be specified to parameters of the NC control device.
As for the data observation device, an NC control unit in an NC control device and a personal computer connected to the NC control unit constitute the data observation device, and the observational and trigger data can be specified through the personal computer.

With the data observation device in accordance with the first aspect of the invention, observational data targeted for observation in the control device can be acquired by applying a trigger depending on a separately specified value of trigger data in the control device which determines the timing of triggering. Therefore, in the case where an abnormality occurs in observational data, when the data value which is a conceivable cause of the abnormality is used for triggering thereby to acquire observational data, the analysis of the cause of the abnormality can be facilitated.

With the data observation device in accordance with the second aspect of the invention, as the observational data can be output after having been accumulated in a buffer provided in the control device once, an extremely intermittent event can be easily analyzed.

With the data observation device in accordance with the third aspect of the invention, the trigger data in the control device is data in at least one of the servo control unit, the spindle control unit, and the high-hierarchical controller unit which provides a command to the control units. Therefore, events in association with servo and spindle control and the interface with the high-hierarchical controller can be easily analyzed.

As for the data observation device in accordance with the fourth aspect of the invention, a kind of data specified for triggering is prepared. Further, a trigger condition that a value of the data is, for example, not less than a first predetermined value nor more than a second predetermined value is set and a trigger is applied when the data satisfies the trigger condition.

As for the data observation device in accordance with the fifth aspect of the invention, plural kinds of data specified for triggering are prepared. Further, with respect to each kind of data, a trigger condition is set and a trigger is applied when all of the data satisfies the trigger condition (AND condition).

As for the data observation device in accordance with the sixth aspect of the invention, plural kinds of data specified for triggering are prepared. Further, with respect to each kind of data, a trigger condition is set and a trigger is applied when at least one of the data satisfies the trigger condition (OR condition).

As for the data observation device in accordance with the seventh aspect of the invention, plural kinds of data specified for triggering are prepared. Further, a trigger is applied when the result of four arithmetic operations are selectively performed with respect to the plural kinds of the data satisfies a certain condition.
Therefore, with the data observation device in accordance with any one of the fourth to seventh aspects of the invention, as a trigger is applied when one or more kinds of internal data specified for triggering satisfy a predetermined condition, observational data can be acquired in accordance with various purposes.

With the data observation device in accordance with the eighth aspect of the invention, as the entire data observation device in line with the second aspect is provided in an NC control device, an additional device other than the NC control device is not needed, and internal data of a control device can be obtained at a low cost.

With the data observation device in accordance with the ninth aspect of the invention, the data observation device is constituted by an NC control unit in an NC control device and a personal computer which are communicatably connected. Further, observational data and trigger data, along with the trigger condition are specified in the personal computer which is easy to operate. Still further, a data acquisition unit is provided in the NC control device. Thus, data in the NC control device can be observed without directly operating the NC control device.

As stated above, the invention allows a trigger to be applied freely in accordance with the state in the control device, and therefore what is observed has a high degree of flexibility. Hence, it is possible to know the state of the control device in more detail, and easily examine and adjust the servo and spindle control systems.

### BRIEF DESCRIPTION OF THE DRAWINGS

Figure. 1 is a block diagram of an internal data observation device for a control device in association with the first embodiment of the invention;
Fig. 2 is a block diagram of an internal data observation device for a control device in association with the second embodiment of the invention;
Fig. 3 is a flow chart of the first trigger condition-judging process in accordance with the invention;
Fig. 4 is a flow chart of the second trigger condition-judging process in accordance with the invention;
Fig. 5 is a flow chart of the third trigger condition-judging process in accordance with the invention;
Fig. 6 is a flow chart of the fourth trigger condition-judging process in accordance with the invention;
Fig. 7 is a block diagram of an internal data observation device for a control device in association with the third embodiment of the invention; and
Fig. 8 is a block diagram of an internal data observation device for a control device in association with the fourth embodiment of the invention.

### DESCRIPTION OF THE PREFERRED EMBODIMENTS

The embodiments of the invention will be described below in detail with reference to the accompanying drawings. While a machine tool having one form will be used as an example in the embodiments below, the invention can be applied to an industrial machine and an industrial robot in addition to a machine tool.

Fig. 1 is a block diagram of an internal data observation device for a control device in association with a first embodiment of the invention. The data observation device 1 shown in Fig. 1 is for observing data in a control device 2 of a machine tool. The machine tool is used in machining a work piece fixed to a table, when the machine tool drives servo motors to convey a table in X-axis and Y-axis directions respectively and drives a servo motor to convey a main shaft of the table in a Z-axis direction, for example. Here, X, Y and Z axes are the axes of an XYZ, a triaxial rectangular coordinate system.

The data observation device 1 is connected to the control device 2 communicatably, and has an observational data-specifying means 11, a trigger data-specifying means 12, a trigger condition-setting means 13, and a data display unit 14. The observational data-specifying means 11 specifies observational data to be targeted for observation. The trigger data-specifying means 12 specifies trigger data used to determine the timing of a trigger (or the timing of triggering) for start and/or termination of acquisition of observational data. The trigger condition-setting means 13 sets a trigger condition to apply a trigger based on a value of trigger data. The data display unit 14 displays the observational data acquired by data acquisition unit 30 on a display device such as a CRT or LCD. When the control device 2 is an NC control device, both observational and trigger data can be specified with parameters. Herein the parameters are pieces of data for making specifications in association with a coordinate system, the control of axes and screen display required for numerical control.

The control device 2 has a control unit 20 and a data acquisition unit 30. The control unit 20 has a high-hierarchical controller 21, a servo control unit 22, and a spindle control unit 23. The high-hierarchical controller 21 analyzes a working program for a work piece, sends a command for driving the servo motor to the servo control unit 22, and sends a command for driving the spindle motor to the spindle control unit 23. The high-hierarchical controller 21 receives feedback data in response to commands from the servo control unit 22 and the spindle control unit 23. The data acquisition unit 30 judges whether or not the trigger condition to be described later is satisfied in the trigger-judging unit 32, and starts or terminates acquisition of observational data from the control unit 20, and acquires observational data.

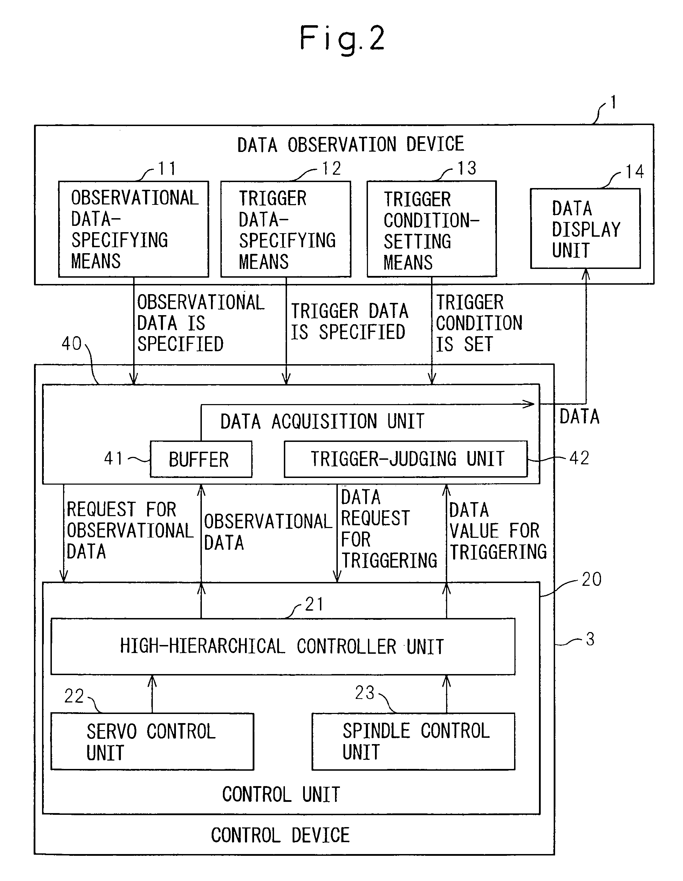

Fig. 2 is a block diagram of an internal data observation device for a control device in association with a second embodiment of the invention. The control device 3 shown in Fig. 2 is configured similarly to the control device 2 shown in Fig. 1, except for the data acquisition unit 40. The data acquisition unit 40 has a buffer 41, uses the trigger-judging unit 42 to judge whether or not the trigger condition to be described later is satisfied, and starts or terminates the accumulation of observational data in the buffer 41, thereby to acquire observational data. The data display unit 14 displays observational data accumulated in the buffer 41 of the data acquisition unit 40 on a display device such as a CRT or LCD. The buffer 41 is in the form of a FIFO, by which the acquired digital data is stored in a plurality of registers in sequence, and when the plurality of registers reach their capacity, their contents are discarded in chronological order.

The trigger condition will be described below. Specifically, trigger data used to determine the trigger timing of observational data may be position feedback data of X-axis and Y-axis servo motors when the observational data are RPM (the Number of Rotations) of a Z-axis spindle motor and an electric current value thereof. In this case, a condition where the position feedback data of the X-axis and Y-axis servo motors are each within a predetermined range can be set as a trigger condition. The trigger condition-judging process will be described below by way of first to fourth concrete

### examples.

As for the flow charts specified in the description below, the numbers following the character "S" show step numbers.

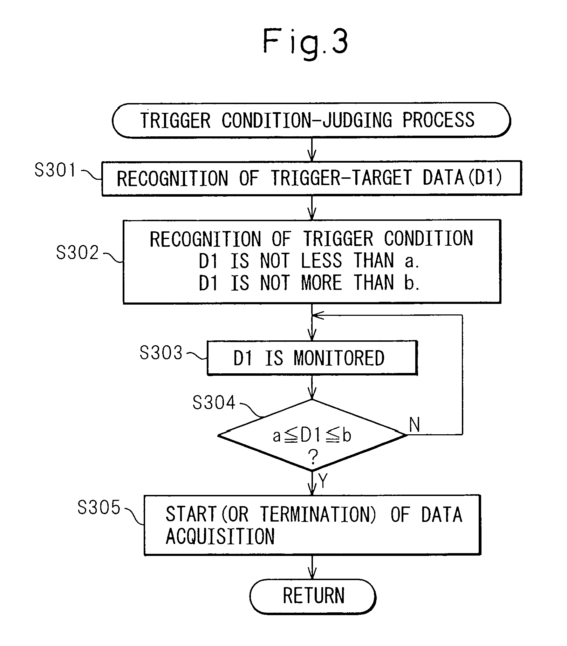

Fig. 3 is a flow chart of the first trigger condition-judging process in accordance with the invention.
At Step S301, trigger-target data D1 is recognized.
At Step S302, a trigger condition (***a*** ≤ D1 ≤ ***b***) is recognized.
At Step S303, the trigger-target data D1 is monitored.
At Step S304, it is judged whether or not the trigger-target data D1 satisfies the trigger condition ***a*** ≤ D1 ≤ ***b***. The process execution proceeds to Step S305 when the result of the judgment is YES, and it returns to Step S303 when the result is NO.
At Step S305, acquisition of observational data is started or terminated.

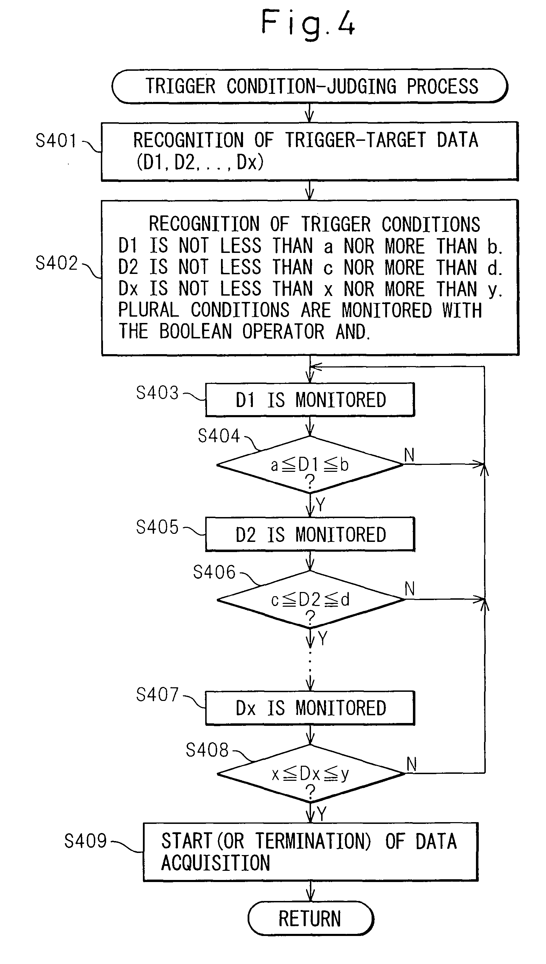

Fig. 4 is a flow chart of the second trigger condition-judging process in accordance with the invention.
At Step S401, trigger-target data D1, D2, .., Dx are recognized.
At Step S402, the trigger condition (all the conditions ***a*** ≤ D1 ≤ ***b*, *c*** ≤ D2 ≤ ***d***, and ***x*** ≤ Dx ≤ ***y*** are met) is recognized.
At Step S403, the trigger-target data D1 is monitored.
At Step S404, it is judged whether or not the trigger-target data D1 satisfies the trigger condition (***a*** ≤ D1 ≤ ***b***) recognized at Step S402. The process execution proceeds to Step S405 when the result of the judgment is YES, and it returns to Step S403 when the result is NO.

At Step S405, trigger-target data D2 is monitored.
At Step S406, it is judged whether or not the trigger-target data D2 satisfies the trigger condition (c ≤ D2 ≤ ***d***) recognized at Step S402. The process execution proceeds to Step S407 when the result of the judgment is YES, and it returns to Step S403 when the result is NO.
At Step S407, the trigger-target data Dx is monitored.
At Step S408, it is judged whether or not the trigger-target data Dx satisfies the trigger condition (***x*** ≤ Dx ≤ ***y***) recognized at Step S402. The process execution proceeds to Step S409 when the result of the judgment is YES, and it returns to Step S403 when the result is NO.
At Step S409, acquisition of observational data is started or terminated.

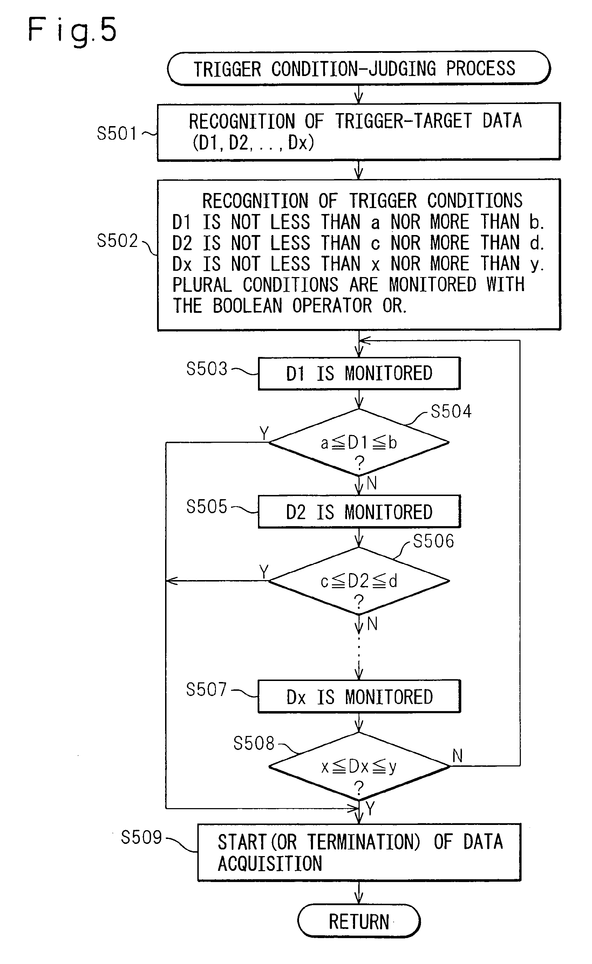

Fig. 5 is a flow chart of the third trigger condition-judging process in accordance with the invention.
At Step S501, the trigger-target data D1, D2, .., Dx are recognized.
At Step S502, the trigger condition (any one of the conditions ***a*** ≤ D1 ≤ ***b, c*** ≤ D2 ≤ **d**, and ***x*** ≤ Dx ≤ ***y*** is met) is recognized.
At Step S503, the trigger-target data D1 is monitored.
At Step S504, it is judged whether or not the trigger-target data D1 satisfies the trigger condition (***a*** ≤ D1 ≤ ***b***) recognized at Step S502. The process execution proceeds to Step S509 when the result of the judgment is YES, and it proceeds to Step S505 when the result is NO.

At Step S505, the trigger-target data D2 is monitored.
At Step S506, it is judged whether or not the trigger-target data D2 satisfies the trigger condition (***c*** ≤ D2 ≤ ***d***) recognized at Step S502. The process execution proceeds to Step S509 when the result of the judgment is YES, and it proceeds to Step S507 when the result is NO.
At Step S507, the trigger-target data Dx is monitored.
At Step S508, it is judged whether or not the trigger-target data Dx satisfies the trigger condition (***x*** ≤ Dx ≤ ***y***) recognized at Step S502. The process execution proceeds to Step S509 when the result of the judgment is YES, and it returns to Step S503 when the result is NO.
At Step S509, acquisition of observational data is started or terminated.

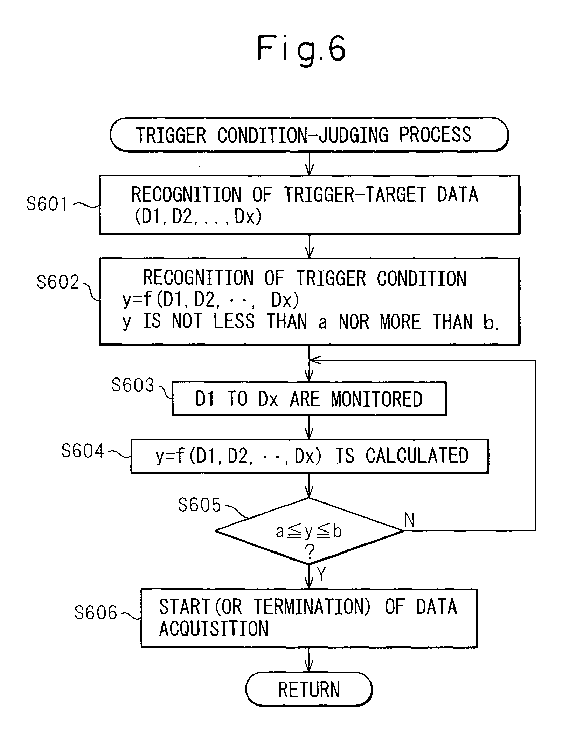

Fig. 6 is a flow chart of the fourth trigger condition-judging process in accordance with the invention.
At Step S601, the trigger-target data D1, D2, .., Dx are recognized.
At Step S602, the trigger condition (***a*** ≤ ***y*** ≤ ***b***) of a function ***y = f***(D1, D2, .., Dx) of the trigger-target data D1, D2, .., Dx is recognized.

At Step S603, the trigger-target data D1, D2, .., Dx are monitored.
At Step S604, the function ***y = f***(D1, D2, .., Dx) is calculated.
At Step S605, it is judged whether or not the function y of the trigger-target data D1, D2, .., Dx satisfies the trigger condition ***a*** ≤ ***y*** ≤ ***b***. The process execution proceeds to Step S606 when the result of the judgment is YES, and it returns to Step S603 when the result is NO.
At Step S606, acquisition of observational data is started or terminated.

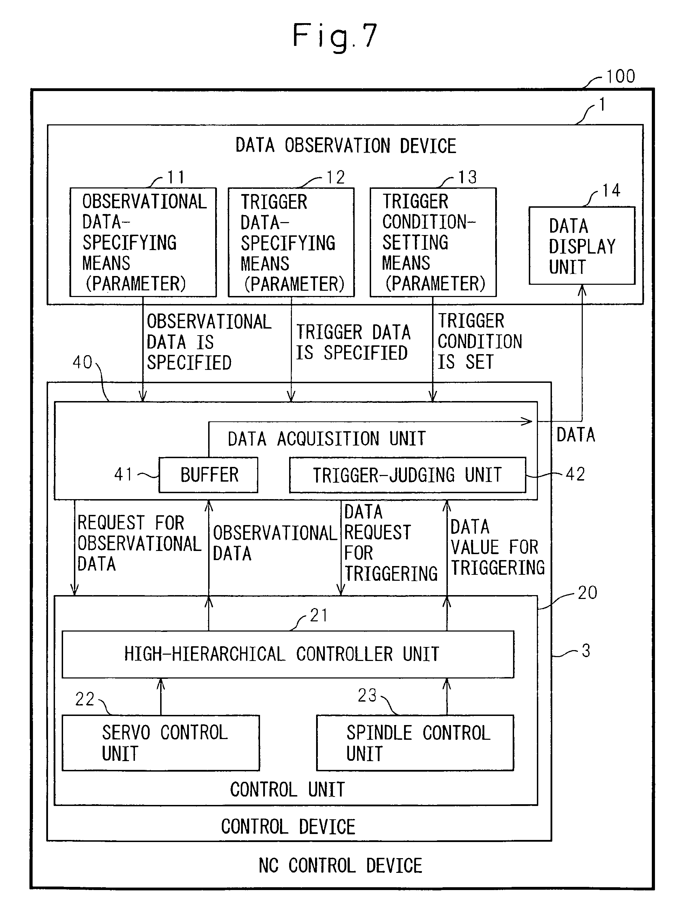

Fig. 7 is a block diagram of an internal data observation device for a control device in association with a third embodiment of the invention. The internal data observation device 1 for the control device 3 in association with the third embodiment of the invention shown in Fig. 7 is configured as the internal data observation device 1 for the control device 3 in association with the second embodiment of the invention shown in Fig. 2 is configured, and all the components are provided in the NC control device 100.

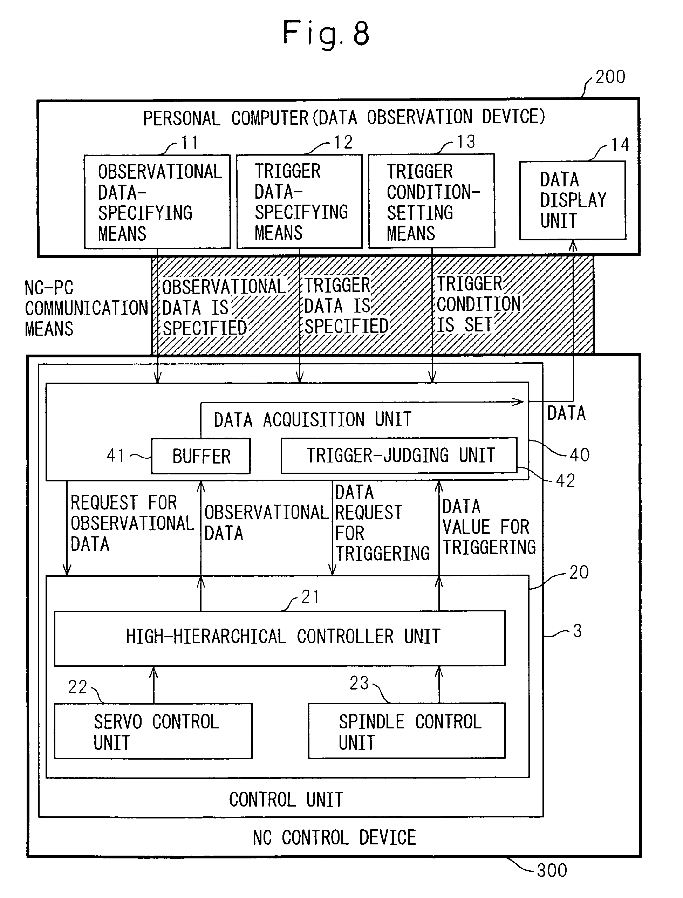

Fig. 8 is a block diagram of an internal data observation device for a control device in association with a fourth embodiment of the invention. The internal data observation device 200 for the control unit 3 of the NC control device 300 in association with the fourth embodiment of the invention shown in Fig. 8 is the internal data observation device 1 for the control device 3 in association with the second embodiment of the invention shown in Fig. 2 in which the data observation unit 1 is provided in the personal computer (PC) 200, and the control device 3 is provided in the NC control device 300. In addition, the PC 200 and the NC control device 300 are connected so that they can communicate mutually.

## Claims

1. A data observation device for observing internal data of a control device for controlling a machine tool, an industrial machine or an industrial robot, which has at least one drive shaft driven by one selected from a servo motor and a spindle motor, the device comprising:
a means which specifies observational data targeted for observation;
a means which specifies trigger data used to determine a timing of a trigger for starting and/or terminating acquisition of the observational data;
a means which sets a trigger condition for applying the trigger based on a value of the trigger data; and
a means which judges whether or not the trigger condition is satisfied in the control device, selectively starts and terminates acquisition of a value of the observational data, and displays the acquired observational data.

2. A data observation device for observing internal data of a control device for controlling a machine tool, an industrial machine or an industrial robot, which has at least one drive shaft driven by one selected from a servo motor and a spindle motor, the device comprising:
a means which specifies observational data targeted for observation;
a means which specifies trigger data used to determine a timing of a trigger for starting and/or terminating acquisition of the observational data;
a means which sets a trigger condition for applying the trigger based on a value of the trigger data; and
a means which judges whether or not the trigger condition is satisfied in the control device, selectively starts and terminates accumulation of a value of the observational data in a buffer memory provided in the control device, and displays the accumulated observational data.

3. The data observation device in accordance with Claim 1 or 2, wherein the observational data and trigger data are contained in at least one of a servo control unit, a spindle control unit, and a high-hierarchical controller unit which provides a command to the servo and spindle control units.

4. The data observation device in accordance with any one of Claims 1 to 3, wherein the trigger is applied when a value of the trigger data specified by the specifying means becomes not less than or not more than a separately specified value.

5. The data observation device in accordance with any one of Claims 1 to 3, wherein plural kinds of trigger data used for the trigger condition are specified,
with respect to each kind of trigger data, a trigger condition that a trigger is applied when a value of trigger data becomes not less than or not more than a separately specified value is set, and
when all the trigger conditions are met, the trigger condition of observational data is regarded as being met.

6. The data observation device in accordance with any one of Claims 1 to 3, wherein plural kinds of trigger data used for the trigger condition are specified,
with respect to each kind of trigger data, a trigger condition that a trigger is applied when a value of trigger data becomes not less than or not more than a separately specified value is set, and
when at least one of the trigger conditions is met, the trigger condition of observational data is regarded as being met.

7. The data observation device in accordance with any one of Claims 1 to 3, wherein plural kinds of trigger data used for the trigger condition are specified,
with respect to the plural kinds of trigger data, the arithmetic operations of addition, subtraction, multiplication and division are selectively performed,
a condition in which a result of the operations becomes not less than or not more than a separately specified value is made the trigger condition of observational data.

8. The data observation device in accordance with any one of Claims 1 to 7, wherein the data observation device is provided in an NC control device, and
the observational data and trigger data can be specified with parameters of the NC control device.

9. The data observation device in accordance with any one of Claims 1 to 7, wherein an NC control unit in an NC control device and a personal computer connected to the NC control unit constitute the data observation device, and
the observational and trigger data can be specified through the personal computer.
